# EUROPÄISCHE PATENTSCHRIFT

(11) **EP 2 513 547 B1**
(45) Veröffentlichungstag und Bekanntmachung des Hinweises auf die Patenterteilung: **23.10.2013**
(21) Anmeldenummer: 10781642.3
(22) Anmeldetag: 11.11.2010
(51) Int. Cl.: F16L 27/087, F16J 15/44

(54) **Radiale Drehdurchführung mit einer Buchse**
Radial rotary feedthrough with a bushing
Passage de rotation radial avec une douille

(30) Priorität: 16.12.2009 DE 102009054794
(43) Veröffentlichungstag der Anmeldung: 24.10.2012
(73) Patentinhaber: GAT Gesellschaft für Antriebstechnik mbH, 65366 Geisenheim (DE)
(72) Erfinder: OTT, Stephan, 65201 Wiesbaden (DE); HOFF, Dennis, 55124 Mainz (DE)
(74) Vertreter: WSL Patentanwälte Partnerschaftsgesellschaft
(86) Internationale Anmeldenummer: PCT/EP2010/067327
(87) Internationale Veröffentlichungsnummer: WO 2011/072962

(56) Entgegenhaltungen:
- EP-A1- 0 072 657
- DE-A1- 3 806 931
- DE-A1- 19 621 020
- DE-A1- 19 621 171
- US-A- 4 743 162

## Beschreibung

Die vorliegende Erfindung betrifft eine radiale Drehdurchführung mit einer Buchse, die eine radiale Gleitringdichtung bildet, nach dem Oberbegriff des Anspruchs 1.

Entsprechende Drehdurchführungen sind beispielsweise bekannt aus der DE 38 06 931, der DE 196 21 020 und der DE 196 21 171.

Die Buchse besteht aus einem hohlzylindrischen Grundkörper, dessen innere Zylinderfläche eine Gleitdichtfläche bildet, die durch eine umlaufende innere Nut in eine erste und eine zweite Gleitdichtfläche aufgeteilt ist. Die Buchse hat weiterhin eine zylindrische Außenfläche, die durch eine umlaufende äußere Nut in eine erste und eine zweite Außenfläche aufgeteilt ist, wobei der die innere und die äußere Nut trennende Wandabschnitt mindestens eine die beiden Nuten verbindende Bohrung aufweist und wobei die erste und die zweite äußere Außenfläche durch je einen stationären Dichtungsring gegen ein die Buchse umfassendes Gehäuse abdichtbar sind.

Die entsprechende Drehdurchführung weist als ein wesentliches Teil mindestens eine solche vorstehend definierte Buchse auf und besteht darüber hinaus noch aus einem die Buchse aufnehmenden Gehäuse und hat gegebenenfalls mindestens ein Kugellager zwischen dem Gehäuse und einer von der Buchse umfaßten drehenden Welle. Die Buchse kann dabei unmittelbar an den Außendurchmesser der entsprechenden Welle angepaßt sein, so daß die Gleitdichtflächen der Buchse unmittelbar auf der Wellenoberfläche gleiten, wenn die Welle sich relativ zu der Buchse dreht.

Gegebenenfalls kann jedoch auch ein innerer Hohlzylinder bzw. eine Hülse, auf welcher die Buchse gleitet, Teil der Drehdurchführung sein, wobei dieser innere Hohlzylinder bzw. diese innere Hülse im Gebrauch mit einer entsprechenden rotierenden Welle fest und abgedichtet verbunden wird. Dabei kann die Hülse die äußeren zylindrischen Gleitdichtflächen aufweisen, welche mit den Gleitdichtflächen auf der Innenseite der Buchse in dichtenden und gleitenden Eingriff treten. Diese Hülse kann demnach bezüglich der Buchse die Funktion der drehenden Welle übernehmen, so daß alle kritischen Schnittstellen, die eine sehr präzise Oberflächenbearbeitung und eine hohe Oberflächenqualität benötigen, sich innerhalb der Drehdurchführung befinden, während die Schnittstellen zu der rotierenden Welle und zu äußeren Anschlüssen jeweils stationär und damit weniger kritisch sind, und insoweit z. B. auch von verschiedenen Herstellern gefertigt und geliefert werden können.

Die Welle kann auch ein kurzer, einen Teil der Drehdurchführung bildender Wellenabschnitt sein, wobei dieser Wellenabschnitt beispielsweise in einem kurzen Flansch endet, der mit einer rotierenden Welle einer entsprechenden Maschine dicht verbunden werden kann.

Im folgenden wird die einfachere Variante betrachtet, bei welcher die Buchse unmittelbar auf der entsprechenden Außenfläche der Welle bzw. eines Wellenabschnittes gleitet. Bei Zwischenschaltung einer Hülse gelten alle Überlegungen analog, indem man die Hülse als mit der Welle fest verbundenes Teil bzw. als Bestandteil der Welle betrachtet.

Über ein äußeres Gehäuse wird die äußere Nut mit einem unter Druck stehenden Fluid beaufschlagt, wobei das Fluid durch die Bohrung, welche die äußere und die innere Nut verbindet, in die innere Nut und damit an den Außenumfang der Welle gelangt, die ihrerseits eine oder mehrere Bohrungen aufweist, welche mit einem entsprechend axial verlaufenden Kanal im Inneren der Welle in Verbindung stehen.

Auf diese Weise ist es möglich, während der Drehung einer Welle ein Fluid von außen in die und durch die Welle zuzuführen oder umgekehrt aus der Welle und durch die Buchse nach außen zu führen, wobei die Welle sich in der Buchse dreht und die aufeinander gleitenden Flächen von Welle und Buchse eine Gleitdichtung bilden.

Es versteht sich, daß man die bei einer solchen Gleitdichtung auftretende Reibung so gering wie möglich halten will, zumal bei relativ hohen Drehzahlen aufgrund der Reibung auch eine entsprechende Reibungswärme entsteht, die bei zu großer Reibung auch zu einem Festfressen der Buchse auf der Welle führen könnte. Andererseits soll möglichst wenig Fluid zwischen den aufeinander gleitenden Flächen entweichen, zumal dann, wenn die Handhabung eines entsprechenden Lecks relativ aufwendig und schwierig ist.

Die Gleitdichtflächen der Buchsen werden daher mit sehr engen Toleranzen und hoher Präzision hergestellt, ebenso wie auch die komplementären Gleitdichtflächen auf einer Welle bzw. gegebenenfalls einer entsprechenden, auf dem Außenumfang der Welle zu befestigenden Hülse, um einen möglichst engen und gleichmäßigen Dichtspalt zu erhalten, der aber dennoch ein leichtes Gleiten der zylindrischen Flächen aufeinander erlaubt.

Insbesondere dann jedoch, wenn das Fluid unter hohem Druck steht, sind gewisse Verformungen der Buchse unvermeidbar, die auch den Verlauf des Dichtungsspaltes zwischen den aufeinander gleitenden Flächen von Welle und Buchse beeinflussen können.

In der DE 38 06 931 wurde bereits versucht, bewußt eine solche Verformung durch passende Wahl von Breite und Tiefe der äußeren Nut sowie der Position einer äußeren stationären Dichtung in der Weise zu bewirken, daß sich tendenziell eine Kegelform der inneren Gleitdichtfläche ergab, wobei der größere Kegeldurchmesser zu der inneren Nut gerichtet sein sollte und der kleinere Kegeldurchmesser jeweils von der inneren Nut abgewandt war.

Dies führt jedoch dazu, daß der Dichtungsspalt sich in dem an die Überführungsnuten angrenzenden Bereich etwas erweitert und an den von der Nut entfernten Enden etwas schmaler wird.

Dieser Ansatz scheint sich aber bei vergleichsweise geringen Drücken bis etwa 100 bar noch zu bewähren.

Es hat sich jedoch inzwischen herausgestellt, daß eine solche Buchsenausgestaltung, auch wenn sie tendenziell zu einer Verringerung der Leckrate beitragen kann, nur bis zu Drücken von etwa 100 bar zufriedenstellend funktioniert. Bei größeren Drücken werden in der Regel aufwendigere Systeme verwendet, bei welchen entsprechende Buchsen beispielsweise mehrteilig oder mit großer axialer Länge ausgebildet sind, um übermäßige Verformungen der Buchse zu vermeiden, die ansonsten nicht mehr tolerierbar wären, weil sie zu hohe Leckraten hätten oder zu einem Festfressen der Buchse auf der Welle und damit zu Beschädigungen von Buchse oder Welle führen könnten.

Gegenüber diesem Stand der Technik liegt der vorliegenden Erfindung die Aufgabe zugrunde, eine Drehdurchführung mit den eingangs genannten Merkmalen zu schaffen, welche auch bei Drücken von deutlich oberhalb 100 bar und auch bei relativ hohen Drehzahlen eine Überführung von Fluid mit geringen Leckraten ermöglicht. Insbesondere soll eine entsprechende Buchse bei Drücken von mehr als 150 bar, und insbesondere bei Drücken von mehr als 200 bar noch gut funktionieren und verwendbar sein.

Dabei sollte die Buchse axial relativ kurz sein, um nicht übermäßig Platz zu beanspruchen.

Für eine Drehdurchführung mit den eingangs genannten Merkmale wird diese Aufgabe dadurch gelöst, daß die Seitenflächen der inneren Nut innerhalb eines Toleranzbereiches von +20% und -35% gleich groß sind wie die Seitenflächen der äußeren Nut und daß eine äußere stationäre Dichtung auf der Außenfläche der Seitenfläche in axialer Richtung so positioniert ist, daß sie von dem axial äußeren Ende der Gleitdichtflächen einen axialen Abstand hat, der mindestens 40% und höchstens 55% der jeweiligen axialen Länge der Gleitdichtfläche entspricht.

Die vorliegende Erfindung geht von der Überlegung aus, daß die im Stand der Technik angestrebte konische Verformung der inneren Gleitdichtflächen, wobei die gedachte Spitze des Konus von der Drehdurchführung weg weist, nach Möglichkeit vermieden werden sollte und daß die Buchse insgesamt so gestaltet werden sollte, daß die bei hohem Druck auf die zahlreichen verschiedenen Flächen der Buchse wirkenden Kräfte so abgefangen werden und sich so kompensieren sollten, daß die Gleitdichtfläche im wesentlichen zylindrisch bleibt und sich allenfalls leicht konisch divergent verformt, was bedeutet, daß der Dichtungsspalt in dem an die innere Nut angrenzenden Bereich enger ist als in den von der Nut entfernteren Bereichen. Dabei geht die Erfindung weiterhin von der Überlegung aus, daß, in einem axialen Schnitt gesehen, die Druckkräfte bezüglich einer Symmetrieachse, deren Lage durch das Zentrum des Querschnitts des die beiden Nuten trennenden Wandabschnittes gebildet wird, ein Drehmoment ausüben und daß die auf die verschiedenen Flächen wirkenden Drehmomente sich im wesentlichen kompensieren sollten. Die Drehmomente lassen sich aus dem Integral über das Produkt von Druck, Fläche und Abstand zur gedachten Drehachse ermitteln, wo wegen des über die Fläche hinweg variierenden Abstands über dieses Produkt hinweg integriert werden muß, und wobei weiterhin zu beachten ist, daß sich im Bereich des Dichtspaltes auch der Druck mit dem Abstand zur gedachten Drehachse ändert.

Dabei kann man der Einfachheit halber paarweise gegensinnig wirkende Drehmomente betrachten, die zum Beispiel durch die Seitenflächen der inneren Nut und der äußeren Nut bezüglich der vorstehend definierten Achse auf den die Gleitdichtflächen tragenden Abschnitt ausgeübt werden. Ein Paar der entsprechenden Drehmomente gleicht sich aus, wenn die ersten und zweiten Seitenflächen der Nuten gleich groß sind und wenn dann auch der mittlere radiale Abstand der inneren Seitenfläche und der äußeren Seitenfläche von der gedachten Drehachse gleich wäre.

Da diese Seitenflächen aber Kreisringflächen mit notwendigerweise unterschiedlichen Radien sind, trifft für einen Drehmomentausgleich diese Bedingung der Flächengleichheit nur näherungsweise zu, so zum Beispiel wenn der Innenradius der Buchse im Verhältnis zum Außenradius der Buchse ohnehin schon relativ groß ist, also beispielsweise mehr als 80 oder 90% des Außenradius beträgt. In diesem Fall haben gleich große Seitenflächen der inneren und äußeren Nut auch annähernd den gleichen Abstand zu einer gedachten Drehachse.

Bei Buchsen mit relativ kleinem Innendurchmesser bei gleichzeitig relativ großem Außendurchmesser wird aber bei Flächengleichheit der Nutseitenflächen der gemittelte Abstand der inneren Nutseitenflächen von der gedachten Drehachse deutlich größer als bei der äußeren Nut. Dies kann dadurch kompensiert werden, daß die innere Nutseitenfläche in einem solchen Fall tatsächlich etwas kleiner ausgebildet wird als die äußere Nutseitenfläche. Aus diesem Grund sind für die Größe der Nutseitenflächen asymmetrische Toleranzschwellen angegeben worden, weil der Drehmomentausgleich schon dann gegeben sein kann, wenn die innere Nutseitenfläche nur etwa 90% oder 95% der äußeren Nutseitenfläche beträgt. Insbesondere kann es ausreichen, wenn die innere Nut innerhalb einer Toleranzschwelle von -10 und +15% dieselbe radiale Tiefe hat wie die äußere Nut, was man als zu der Flächengleichheit alternative Bedingung angeben kann, insbesondere für Buchsen mit relativ großem Innendurchmesser. In diesem Fall ist die Toleranzschwelle asymmetrisch nach oben, d. h. in Richtung einer größeren radialen Tiefe der inneren Nut, verschoben.

Ein weiteres Paar entgegengesetzter Drehmomente wird ausgeübt durch den Druck auf die innere Gleitdichtfläche und den Druck auf die zylindrische Außenfläche im Bereich bis zu der stationären Dichtung auf der Außenseite der Buchse, der noch mit dem vollen Druck beaufschlagt wird. Da sich der Druck auf die Gleitdichtfläche entlang der Länge des Gleitdichtspaltes kontinuierlich (im allgemeinen linear) verändert und vom vollen Druck bis auf den Druck Null (bzw. den Umgebungsdruck) abfällt, während auf der Außenseite der Buchse der volle Druck bis zur Dichtung hin ansteht, kompensieren sich die entsprechenden Drehmomente nur in einem gewissen Bereich für die Position der äußeren Dichtung. Verlegt man die äußere Dichtung in einen zu großen Abstand von der äußeren Nut, ergibt sich tendenziell eher die im Stand der Technik angestrebte konvergent konische Form, während sich bei einem Verschieben der Position der äußeren Dichtung bis nahe an die äußere Nut heran tendenziell eher eine divergente Verformung der inneren Gleitdichtfläche ergibt. Eine weitgehende Kompensation der vorstehend betrachteten Drehmomente erhält man bei einer axialen Position der äußeren Dichtung, die bei 40 bis 55% der axialen Länge der Gleitdichtfläche liegt, gemessen vom axial äußeren Ende der Gleitdichtfläche, wobei diese Dichtung sich allerdings nicht auf der Gleitdichtfläche, sondern gegenüberliegend auf der Außenfläche der Buchse befindet.

Darüber hinaus ist klar, daß ein etwaiges Ungleichgewicht der Kräfte bzw. Drehmomente an dem einen Paar von Flächen, welche vorstehend betrachtet wurden, durch ein entsprechend umgekehrtes Ungleichgewicht der Drehmomente an dem anderen Paar von Flächen ganz oder teilweise kompensiert werden kann, so daß beispielsweise eine Verkleinerung des Verhältnisses der inneren Nutseitenfläche zur äußeren Nutseitenfläche durch einen entsprechenden größeren axialen Abstand der äußeren Dichtung von dem axial äußeren Ende der Gleitdichtfläche kompensiert werden kann. Mit anderen Worten, wenn die Toleranzschwelle von -35% für das Verhältnis der Nutseitenflächen unterschritten wird, kann dies gegebenenfalls dadurch kompensiert werden, daß man sich an die obere Grenze von 55% der axialen Position der stationären Dichtung annähert oder diese gegebenenfalls auch überschreitet.

Die erfindungsgemäßen Maßnahmen wirken sich insbesondere bei hohen Drücken dahingehend aus, daß die Gleitdichtflächen ihre zylindrische Form behalten oder, von der inneren Nut aus gesehen, eine konisch leicht divergente Form annehmen, d.h. der Dichtungsspalt in der Nähe der Nut aufgrund der entsprechenden Druckwirkungen tendenziell etwas kleiner wird, während der Dichtungsspalt an den äußeren Enden der Gleitdichtflächen tendenziell etwas größer wird. Dies bedeutet eine Konusform der Gleitdichtflächen mit einem sehr kleinen Winkel, der gegenüber dem Konuswinkel, wie er aus dem Stand der Technik bekannt ist, ein umgekehrtes Vorzeichen hat. Anders gesprochen, liegt die (gedachte) Spitze eines solchen Konus gegenüber dem Stand der Technik auf der entgegengesetzten Seite, wobei allerdings die exakt zylindrische Form der Gleitdichtflächen bevorzugt ist. Im Idealfall bleibt also die exakt zylindrische Form der Gleitdichtfläche der Buchse erhalten.

Überraschenderweise hat sich herausgestellt, daß bei einer solchen Ausgestaltung die hinsichtlich ihrer sonstigen Merkmale an sich bereits bekannten Buchsen auch bei Drücken oberhalb von 200 bar noch sehr gut funktionieren, d.h. daß entsprechend ausgestaltete Drehdurchführungen ohne inakzeptable Leckagen und ohne Beschädigung der Gleitdichtflächen bei hohen Drehzahlen Fluid übertragen können.

Die vorstehend beschriebene Geometrie sorgt dabei für die Beibehaltung der zylindrischen Form oder führt allenfalls zu einer sehr leicht konisch divergenten Verformung der Gleitdichtflächen. Beispielsweise kann man sich in einem Querschnitt das Zentrum des zwischen dem Grund der jeweiligen Nuten gebildeten Wandabschnittes als eine Schwenkachse vorstellen, um welche aufgrund der Druckbeaufschlagung die die Gleitdichtflächen tragenden Enden der Buchse "verschwenken" können, auch wenn ein entsprechender "Verschwenkungswinkel" nahezu verschwindend klein ist und beispielsweise in der Größenordnung von Gradminuten oder darunter liegt.

Die erfindungsgemäßen Maßnahmen sind also insoweit im Zusammenhang zu sehen, daß die Bedingung, daß die Seitenflächen der inneren Nut gleich groß sind wie die der äußeren Nut, nur dann zwingend einzuhalten ist, wenn der axiale Abstand der äußeren Dichtung zu dem axial äußeren Ende der entsprechenden Gleitdichtfläche 40% oder mehr der axialen Länge der Gleitdichtfläche beträgt. Das Unter- oder Überschreiten der Toleranzschwellen bei einer der beiden Bedingungen kann also durch ein entsprechendes Über- oder Unterschreiten der Toleranzschwellen der jeweils anderen Bedingung kompensiert werden.

Zweckmäßig ist es jedoch, wenn die geometrischen Verhältnisse der Buchse so eingestellt werden, daß die auf die verschiedenen Abschnitte der Buchse einwirkenden Kräfte und Drehmomente bei entsprechend hohem Druck allenfalls eine leichte, gleichmäßige Aufweitung oder eine nur geringe divergente Verformung der Gleitdichtflächen bewirken, so daß man die eben beschriebenen Kompensationseffekte nicht berücksichtigen muß. Demzufolge reicht es gemäß einer bevorzugten Ausführungsform der Erfindung aus, wenn die Seitenflächen der inneren Nut zwischen 0 und 20% kleiner sind als die Seitenflächen der äußeren Nut und wenn gleichzeitig die axiale Position der äußeren stationären Dichtung zwischen 40 und 55% der axialen Länge der Gleitdichtfläche liegt. Alternativ reicht es aus, wenn die radiale Tiefe der inneren Nut innerhalb einer Toleranzschwelle von -10 % und + 15% dieselbe ist wie die radiale Tiefe der äußeren Nut und wenn dabei wiederum gleichzeitig die axiale Position der äußeren stationären Dichtung zwischen 40 und 55% der axialen Länge der Gleitdichtfläche liegt.

Die äußere Dichtung bzw. die Dichtungsringe auf der Außenseite der Buchse sollten aus einem möglichst extrusionsfesten Material bestehen, da bei hohen Drücken über 200 bar herkömmliche Dichtungen dazu neigen, sich in den äußeren Spalt zwischen Buchsenaußenfläche und Gehäuseinnenfläche hineinzuquetschen, auch wenn sie in einer Nut in der Innenfläche des Gehäuses aufgenommen sind, zumal dann, wenn die Außenflächen der Buchse sowie die diesen gegenüber liegenden Innenflächen des Gehäuses nicht in enger Passung hergestellt sind, um der Buchse auf der rotierenden Welle ein gewisses Bewegungsspiel zu geben.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Drehdurchführung mit einer Buchse, welche die erfindungsgemäßen Merkmale aufweist,
- Figur 2: einen axialen Schnitt durch eine Buchse entlang der Ebene II-II,
- Figur 3: eine Schnittansicht durch eine Buchse in der Ebene III-III,
- Figur 4: eine Seitenansicht auf die Buchse gemäß Figur 2 von rechts oder links. Und
- Figur 5: einen vergrößerten Ausschnitt aus Figur 2

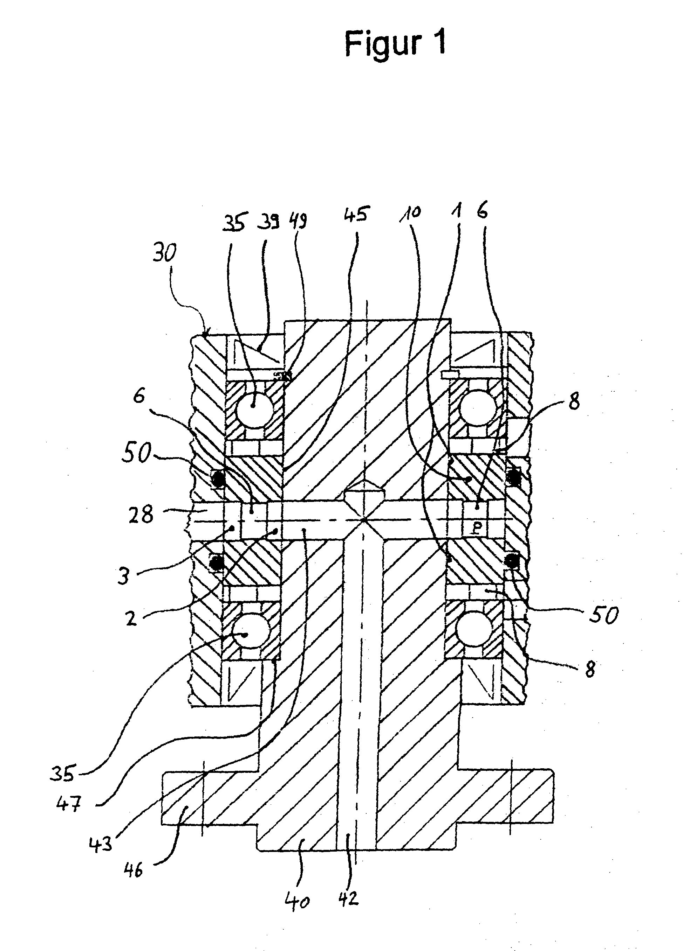

Man erkennt in Figur 1 ein im allgemeinen zylindrisches, hier weggebrochen dargestelltes Gehäuse 30, in welchem eine Buchse 10 aufgenommen ist. Die axiale Position der Buchse 10 im Inneren des Gehäuses 30 ist festgelegt durch die Position zweier Kugellager 35, deren Position wiederum durch geeignete Mittel, wie zum Beispiel einen Anschlag in Form einer radial vorspringenden Stufe oder einen Sprengring (nicht dargestellt), in dem Gehäuse festgelegt ist und die die Buchse 10 in ihrer Position halten. Innerhalb der Buchse 10 befindet sich wiederum eine drehbare Welle 40, die mit den Innenringen der Kugellager 35 verbunden ist und eine äußere, zylindrische Gleitdichtfläche 45 aufweist, welche mit den Gleitdichtflächen 1a, 1b der Buchse 10 in dichtendem und gleitendem Eingriff steht.

Ein Absatz 47 einerseits definiert mit einem Sprengring 49 am Ende der Welle 40 andererseits die axiale Position der Welle 40 in der Drehdurchführung. Einfache (nicht druckbeaufschlagte) Abschlußdichtungen 39 stehen in Gleitkontakt mit der Welle 40 und schirmen die Kugellager 35 nach außen ab.

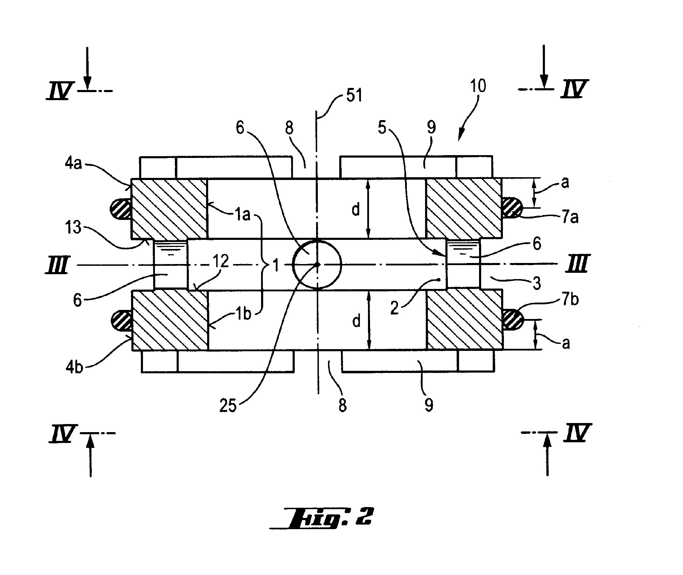

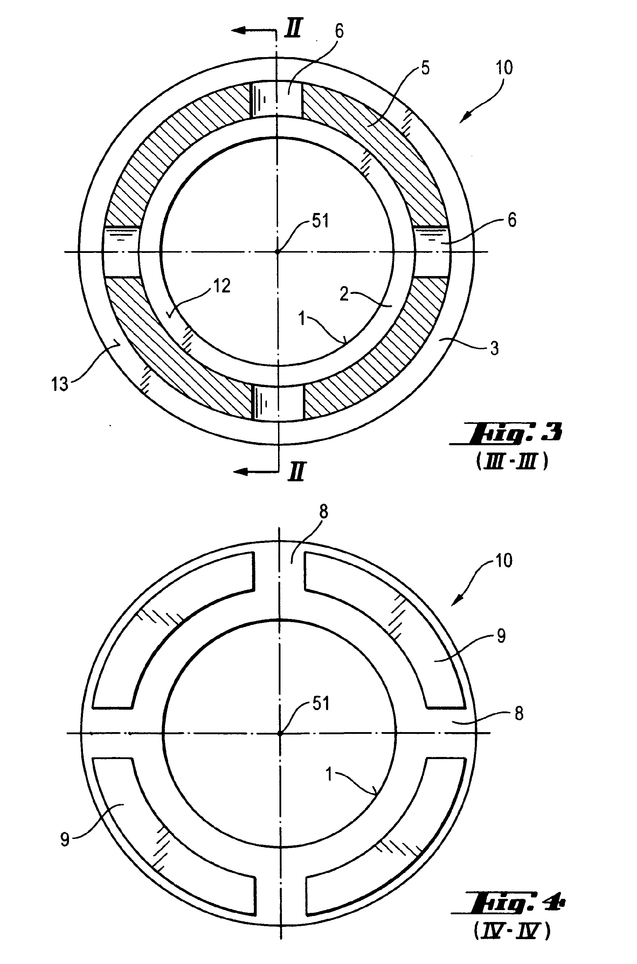

Das Gehäuse 30 weist eine radiale Bohrung 28 auf, in der ein Druck P ansteht. Die Buchse 10, die in Zusammenhang mit den Figuren 2 bis 4 noch genauer beschrieben wird, weist eine innere Nut 2 und eine äußere Nut 3 auf, welche durch Bohrungen 6 miteinander verbunden sind, und die axiale Lage dieser Nuten 2, 3 und der Bohrungen 6 stimmt mit der axialen Position der Zufuhrbohrung 28 (in der ein Druck P herrscht) überein. Diese Zuführbohrung 28 steht somit mit der äußeren Nut 3 der Buchsen 10 in Verbindung, während die innere Nut 2 der Buchse 10 mit einer radialen Bohrung 43 der Welle 40 in Verbindung steht, und die Bohrung 43 mit einem axialen Kanal oder einer Bohrung 42 in Verbindung steht, die in Längsrichtung der Welle 40 verläuft. In dem dargestellten Beispiel endet die Welle 40 in einem Flansch 46 und einer Anschlußverbindung mit einem weiteren drehenden Maschinenteil bzw. einer weiteren drehenden Welle, mit welcher das Fluid entlang des Kanals 42 axial zugeführt werden soll.

Unter hohem Druck P stehendes Fluid, welches durch die Bohrung 28 zugeführt wird, gelangt also über die Nut 3, die Bohrung 6, die Nut 2 und die radiale Bohrung 43 in den Kanal 42. Die Buchse 10 ist in dem Gehäuse 30 über Dichtringe 7a, 7b abgedichtet montiert. Die Welle 40 kann sich mit den Innenringen der Kugellager 35 und innerhalb der Buchsen 10 drehen, wobei die zylindrischen Innenflächen 1 der Buchse 10 auf der zylindrischen Außenfläche 45 mit sehr geringem radialen Spiel gleiten, so daß die Flächen 1, 45 Gleitdichtflächenpaare bilden.

Das Fluid in der Nut 2 und der angrenzenden Bohrung 43 steht unter hohem Druck, und dringt so auch zwischen die Gleitdichtflächen 1, 45, die aber einen so engen Dichtspalt bilden, daß das Fluid nur in sehr geringem Maße durch diesen Dichtungsspalt hindurchtreten kann und anschließend über die Leckbohrungen 8 und einen die Leckbohrungen verbindenden gemeinsamen Kanal und eine Abführöffnung zurückgeführt werden kann.

Die Details der Buchse10 werden nun anhand der Figuren 2 bis 5 beschrieben.

Figur 2 zeigt eine Buchse in einem die Achse 51 dieser Buchse enthaltenden axialen Längsschnitt. Die Buchse 10 besteht aus einem im wesentlichen hohlzylindrischen Grundkörper mit zylindrischen Innenflächen 1 und zylindrischen Außenflächen 4a, 4b, die durch Nuten 2, 3 auf der Innenfläche und der Außenfläche jeweils in erste und zweite Abschnitte 1a, 1b der zylindrischen Innenflächen 1 und 4a, 4b der zylindrischen Außenflächen 4 aufgeteilt sind. Stirnseitig erkennt man jeweils noch einen ringförmigen Ansatz 9, der nicht zwingend vorhanden sein muß, sondern nur optional vorgesehen ist und gegebenenfalls einen Leckraum definiert und Bohrungen 8 zur Abführung von Leckflüssigkeit aufweist.

Auf den Außenflächen 4a, 4b erkennt man jeweils einen Dichtring 7a, 7b, wobei dieser Dichtring 7a bzw. 7b sich in einem bestimmten axialen Abstand a vom axial äußeren Ende der Gleitdichtflächen 1a bzw. 1 b befindet. Dieser Abstand a liegt zwischen 40 und 55% der axialen Gesamtlänge d der jeweils gegenüberliegenden zylindrischen Innenfläche 1a bzw. 1 b. Die beiden Nuten 2 und 3 haben eine gewisse radiale Tiefe, die so festgelegt wird, daß die kreisringförmigen Seitenflächen 12 der inneren Nut 2 in etwa genau so groß oder etwas kleiner sind wie die kreisringförmigen Seitenflächen 13 der Nut 3. Insbesondere sollte die Fläche 12 höchstens 35% kleiner sein als die Fläche 13, sie kann aber auch bis zu 20% größer sein als die Fläche 13, wenn der Abstand a des Dichtungsringes im Verhältnis zur Länge d der Gleitdichtflächen nur 40% beträgt oder kleiner ist. Die beiden Nuten 2, 3 sind durch einen die rechten und linken ring- bzw. zylinderförmigen Abschnitte der Buchse 10 verbindenden Wandabschnitt 5 getrennt, wobei dieser Wandabschnitt 5 von Bohrungen 6 durchsetzt ist, welche die Nuten 2 und 3 miteinander verbinden.

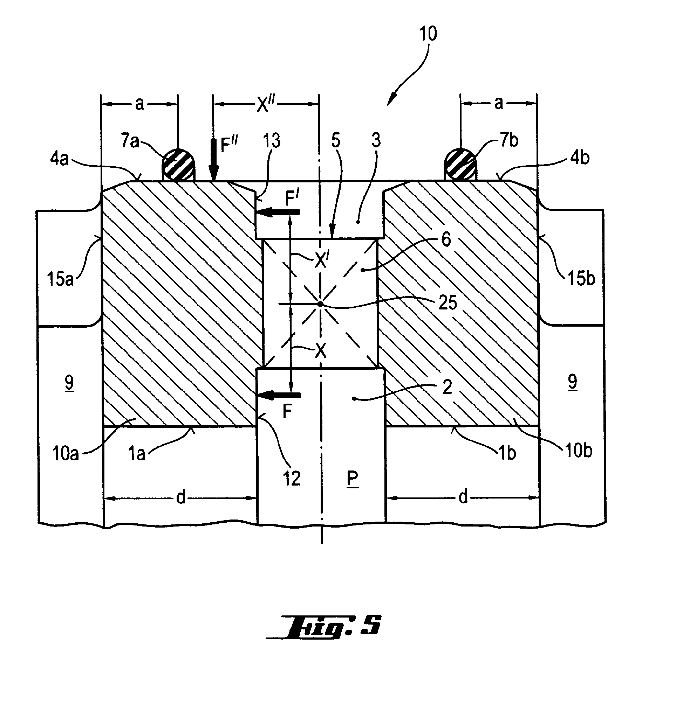

Die Bohrungen 6, die Nuten 2, 3 und der Bereich der zylindrischen Außenflächen 4a, 4b der Nut 3 bis zu den Dichtungen 7a, 7b wird mit dem Druck P beaufschlagt, der in der Zuführbohrung 28 ansteht. Dieser Druck kann beispielsweise 300 bar und mehr betragen. Damit werden die rechts- und linksseitigen Buchsenabschnitte Kräften ausgesetzt, welche die Tendenz haben, die Buchse zu verformen. Der Schnittpunkt zweier gestrichelter Linien in der oben dargestellten Bohrung 6, welche gleichzeitig den Querschnitt des Wandabschnitts 5 definiert, definiert die senkrecht zur Bildfläche verlaufende Drehachse 25, bezüglich welcher die rechten und linken zylindrischen Abschnitte der Buchse um geringe Beträge verschwenken können. Dies wird anhand eines vergrößerten Ausschnittes aus Figur 2, der in Figur 5 wiedergegeben ist, nochmals verdeutlicht. Der Druck P1, der in den Nuten 2 und 3 auf die Nutseitenflächen 12 und 13 wirkt, erzeugt bezüglich der gedachten Achse 25 ein Drehmoment, das sich als Flächenintegral des Produktes aus der auf die Fläche 12 wirkenden Kraft F mit dem jeweiligen vertikalen Abstand X zur Drehachse 25 ergibt. Ein analoges, aber entgegengesetzt wirkendes Drehmoment ergibt sich durch Integration der auf die Fläche 13 wirkenden Kraft F', wiederum multipliziert mit dem in Figur 5 vertikalen Abstand X' zwischen der Kraft und der Drehachse 25. Ein weiteres Drehmoment auf den jeweiligen Buchsenabschnitt wird ausgeübt durch eine radial einwärts (in Figur 5 nach unten) wirkende Kraft F", die in dem Bereich der Außenflächen 4a, 4b wirksam ist, der zwischen der Nut 3 und der Dichtung 7a bzw. 7b liegt. Auch in diesem Fall muß wieder integriert werden über das Produkt aus der Kraft und dem horizontalem Abstand X" der Kraft zu der gedachten Achse 25, wobei die differentielle Kraft dF sich als das Produkt P x dA (mit dem Druck P und dem Flächenelement dA) ergibt und somit über die entsprechende Fläche hinweg integriert werden muß.

Diese Fläche ist eine zylindrische Außenfläche 4a, 4b der axialen Länge d - a, wenn a die Position der Dichtung 7a bzw. 7b vom axial äußeren Ende der Gleitdichtflächen 1a bzw. 1b definiert und d die axiale Länge dieser Gleitdichtflächen 1a bzw. 1 b ist.

Etwaige Abschrägungen in den Eckbereichen zwischen Nut und Zylindermantelfläche können ignoriert bzw. rechnerisch durch eine entsprechende rechtwinklige Ergänzung ersetzt werden.

Schließlich wirkt noch ein Drehmoment aufgrund des Druckes, der von dem Fluid in dem Dichtspalt zwischen den Gleitdichtflächen 1 a und 1 b und den damit in Gleitkontakt stehenden Flächen 45 einer Welle 40 ausgeübt wird. Da es sich hier um Gleitdichtflächen bzw. einen Gleitdichtspalt handelt, kann man in erster Näherung davon ausgehen, daß der Druck über die Länge des Spaltes hinweg von dem maximalen Druck am Übergang zur Nut 2 bis auf den Umgebungsdruck am axial äußeren Ende des Dichtungsspaltes linear abfällt. Auch hier kann man wieder das resultierende Drehmoment als Flächenintegral der Kraft, multipliziert mit dem Abstand zur Drehachse 25, berechnen.

Zweckmäßig ist es dann, die Flächen 12, 13 so auszugestalten, daß sich die auf diese Flächen wirkenden Momente näherungsweise ausgleichen und daß sich auch die auf die Flächen 1 a, 1 b einerseits bzw. 4a, 4b andererseits wirkenden Drehmomente ausgleichen. Dies führt zu der bereits erwähnten Bedingung, daß die Flächen 12, 13 näherungsweise gleich groß sein sollten, wobei die Fläche 12 tendenziell auch etwas kleiner sein kann als die Fläche 13 und daß der Abstand a im Bereich 40 bis 55% der axialen Länge d der Gleitdichtflächen 1a bzw. 1 b liegt.

Für Buchsen mit relativ großem Innendurchmesser kann die radiale Tiefe der inneren Nut 2 in etwa dieselbe sein wie die radiale Tiefe der äußeren Nut 3, während die Position des Dichtungsringes sich in dem bereits erwähnten Bereich bewegt.

## Patentansprüche

1. Drehdurchführung mit einem Gehäuse (30) und einer in dem Gehäuse abgedichtet aufgenommenen Buchse, wobei die Buchse (10) aus einem hohlzylindrischen Grundkörper besteht, dessen innere Zylinderfläche eine Gleitdichtfläche (1) bildet, die durch eine umlaufende innere Nut (2) in eine erste (1a) und eine zweite Gleitdichtfläche (1b) aufgeteilt ist, die für den dichtenden Gleiteingriff mit einem rotierenden Maschinenteil (40) vorgesehen sind, und wobei die Buchse eine zylindrische Außenfläche (4) hat, welche durch eine umlaufende äußere Nut (3) in eine erste (4a) und eine zweite Außenfläche (4b) aufgeteilt ist, wobei der die innere (2) und die äußere Nut (3) trennende Wandabschnitt (5) mindestens eine die beiden Nuten (2, 3) verbindende Bohrung (6) aufweist und wobei die erste (4a) und die zweite Außenfläche (4b) durch je einen stationären Dichtungsring (7a,b) gegen das die Buchse (10) umfassende Gehäuse (30) abgedichtet sind, **dadurch gekennzeichnet, dass** die Seitenflächen (12a,b) der inneren Nut (2) innerhalb einer Toleranzschwelle von +20% und -35% gleich groß sind wie die Seitenflächen (13a,b) der äußeren Nut (3) und daß die stationären Dichtungsringe (7a,b) auf den Außenflächen (4a,b) der Buchse in axialer Richtung so positioniert sind, daß sie von dem axial äußeren Ende der gegenüberliegenden Gleitdichtflächen (1a,b) einen axialen Abstand (a) haben, der mindestens 40% und höchstens 55% der jeweiligen axialen Länge (d) der Gleitdichtflächen (1 a,b) entspricht.

2. Drehdurchführung nach Anspruch 1, **dadurch gekennzeichnet, daß** die radiale Tiefe der inneren Nut (2) mindestens 1/6, vorzugsweise mindestens 1/5 der Differenz der Radien von Außenfläche (4) und Gleitdichtfläche (1) beträgt.

3. Drehdurchführung nach einem der Ansprüche 1 oder 2, **dadurch gekennzeichnet, daß** der die inneren und äußeren Nuten (2, 3) verbindende Wandabschnitt (5) mehrere radiale Bohrungen in gleichen Winkelabständen aufweist.

4. Drehdurchführung nach einem der Ansprüche 1 bis 3, **dadurch gekennzeichnet, daß** die axiale Länge der Gleitdichtflächen größer als die axiale Länge der inneren Nut (2) ist

5. Drehdurchführung nach einem der Ansprüche 1 bis 4, **dadurch gekennzeichnet, daß** die Stirnseiten der Buchse axiale Ririgansätze aufweisen, deren Innendurchmesser größer als derjenige der Gleitdichtflächen (1) und deren Außendurchmesser kleiner als derjenige der Außenflächen ist, und die mindestens eine den Ringansatz (9) radial durchgreifende Aussparung (8) haben.

6. Drehdurchführung nach einem der Ansprüche 1 bis 5, **dadurch gekennzeichnet, daß** in dem Gehäuse zwei axial hintereinander angeordnete Buchsen aufgenommen sind.

7. Drehdurchführung nach einem der Ansprüche 1 bis 6, **dadurch gekennzeichnet, daß** die Dichtringe (7a, 7b) aus einem extrusionsfesten Material bestehen.

## Claims

1. A rotary union joint comprising a housing (30) and a bush which is accommodated in sealed relationship in the housing, wherein the bush (10) comprises a hollow cylindrical main body whose inner cylindrical surface forms a sliding sealing surface (1) divided by a peripherally extending inner groove (2) into a first (1a) and a second sliding sealing surface (1b) for sealing sliding engagement with a rotating machine part (40) and wherein the bush has a cylindrical outside surface (4) which is divided by a peripherally extending outer groove (3) into a first (4a) and a second outside surface (4b), wherein the wall portion (5) separating the inner (2) and the outer grooves (3) has at least one bore (6) connecting the two grooves (2, 3) and wherein the first (4a) and the second outside surface (4b) can be sealed off by a respective stationary sealing ring (7a, b) in relation to the housing (30) embracing the bush (10), **characterized in that** the side surfaces (12a, b) of the inner groove (2) are of the same size within a tolerance threshold of +20 % and -35 % as the side surfaces (13a, b) of the outer groove (3) and the stationary sealing rings (7a, b) are so positioned on the outside surfaces (4a, b) of the bush in the axial direction that they are at an axial spacing (a) from the axially outer end of the oppositely disposed sliding sealing surfaces (1a, b), that corresponds to at least 40 % and at most 55 % of the respective axial length (d) of the sliding sealing surfaces (1a, b).

2. Rotary union joint according to claim 1 **characterized in that** the radial depth of the inner groove (2) is at least 1/6, preferably at least 1/5 of the difference in the radii of the outside surface (4) and the sliding sealing surface (1).

3. Rotary union joint according to one of claims 1 or 2 **characterized in that** the wall portion (5) connecting the inner and outer grooves (2, 3) has a plurality of radial bores at equal angular spacings.

4. Rotary union joint according to one of claims 1 to 3 **characterized in that** the axial length of the sliding sealing surfaces is greater than the axial length of the inner groove (2).

5. Rotary union joint according to one of claims 1 to 4 **characterized in that** the ends of the bushes have axial annular projections, the inside diameter of which is larger than that of the sliding sealing surfaces (1) and the outside diameter of which is smaller than that of the outside surfaces and which have at least one opening (8) extending radially through the ring projection (9).

6. Rotary union joint according to one of claims 1 to 5 **characterized in that** two axially successively arranged bushes are accommodated in the housing.

7. Rotary union joint according to one of claims 1 to 6 **characterized in that** the sealing rings (7a, 7b) comprise an extrusion-resistant material.

## Revendications

1. Passage tournant comprenant un boîtier (30) et une douille montée à joint étanche dans le boîtier, la douille (10) étant faite d'un corps de base cylindrique creux dont la surface cylindrique intérieure forme une surface d'étanchéité glissante (1) qui est divisée par une gorge intérieure circonférentielle (2) en une première surface d'étanchéité glissante (1a) et une seconde surface d'étanchéité glissante (1b) qui sont prévues pour établir un contact de glissement étanche avec une pièce de machine tournante (40) et la douille présentant une surface extérieure cylindrique (4) qui est divisée par une gorge extérieure circonférentielle (3) en une première surface extérieure (4a) et une seconde surface extérieure (4b), le segment de paroi (5) qui sépare la gorge intérieure (2) de la gorge extérieure (3) présentant au moins un perçage (6) qui relie les deux gorges (2, 3), et la première surface extérieure (4a) et la seconde surface extérieure (4b) étant montées à joint étanche contre le boîtier (30) qui entoure la douille (10), chacune au moyen d'une bague d'étanchéité fixe (7a,b), **caractérisé en ce que** les surfaces latérales (12a,b) de la gorge intérieure (2) sont de mêmes dimensions que les surfaces latérales (13a,b) de la gorge extérieure (3), dans les limites d'un seuil de tolérance de +20 % et de -35 %, et **en ce que**, vu dans la direction axiale, les bagues d'étanchéité fixes (7a,b) sont positionnées sur les surfaces extérieures (4a,b) de la douille dans une direction axiale de façon telle qu'elles se trouvent à une distance axiale (a) de l'extrémité axialement extérieure des surfaces d'étanchéité glissantes opposées (1a,b) qui correspond au moins à 40 % et au plus à 55 % de la longueur axiale correspondante (d) des surfaces d'étanchéité glissantes (1a,b).

2. Passage tournant selon la revendication 1, **caractérisé en ce que** la profondeur radiale de la gorge intérieure (2) vaut au moins 1/6, de préférence au moins 1/5 de la différence entre les rayons de la surface extérieure (4) et de la surface d'étanchéité glissante (1).

3. Passage tournant selon l'une des revendications 1 ou 2, **caractérisé en ce que** le segment de paroi (5) qui relie les gorges intérieure et extérieure (2, 3) présente plusieurs perçages radiaux à intervalles angulaires égaux.

4. Passage tournant selon l'une des revendications 1 à 3, **caractérisé en ce que** la longueur axiale des surfaces d'étanchéité glissantes est plus grande que la longueur axiale de la gorge intérieure (2).

5. Passage tournant selon l'une des revendications 1 à 4, **caractérisé en ce que** les côtés frontaux de la douille présentent des saillies axiales annulaires dont le diamètre intérieur est plus grand que celui des surfaces d'étanchéité glissantes (1), et dont le diamètre extérieur est plus petit que celui des surfaces extérieures, et qui présentent au moins un évidement (8) qui traverse radialement la saillie annulaire (9).

6. Passage tournant selon l'une des revendications 1 à 5, **caractérisé en ce que** deux douilles disposées axialement l'une à la suite de l'autre sont montées dans le boîtier.

7. Passage tournant selon l'une des revendications 1 à 6, **caractérisé en ce que** les bagues d'étanchéité (7a, 7b) sont composées d'une matière qui résiste à l'extrusion.
